# EUROPÄISCHE PATENTANMELDUNG

(11) **EP 2 194 711 A1**
(43) Veröffentlichungstag der Anmeldung: **09.06.2010**
(21) Anmeldenummer: 08021203.8
(22) Anmeldetag: 05.12.2008
(51) Int. Cl.: H04N 5/74, H04N 9/31

(54) **Verfahren zur Erzeugung eines Projektionsbildes, insbesondere für anamorphotische Abbildungen**

(71) Anmelder: Ort Studios GmbH, 80799 München (DE)
(72) Erfinder: Barth, Christoph, 85567 Grafing (DE)
(74) Vertreter: Hertz, Oliver

(57) **Zusammenfassung**

Ein Verfahren zur Erzeugung eines Projektionsbildes (P) für eine Bildfläche (1), wobei das Projektionsbild (P) in Reflexion an einer Reflektorfläche (2) ein Reflexionsbild (R) gemäß R = F(P) ergibt und F eine vorbestimmte Abbildungsfunktion ist, umfasst die Schritte Bereitstellung des Reflexionsbildes (R) und Ermittlung des Projektionsbildes (P) durch eine Umkehrung der Reflexion des Reflexionsbildes (R) an der Reflektorfläche (2) auf die Bildfläche (1), wobei die Umkehrung der Reflexion des Reflexionsbildes (R) die Anwendung einer vorbestimmten Umkehrfunktion F⁻¹ auf das Reflexionsbild (R) umfasst, wobei das Projektionsbild (P) gemäß P = F⁻¹(R) berechnet wird.

## Beschreibung

Die Erfindung betrifft ein Verfahren zur Erzeugung eines Projektionsbildes mit den Merkmalen des Oberbegriffs von Anspruch 1, insbesondere ein Verfahren zur Erzeugung eines anamorphotischen Bildes. Anwendungen der Erfindung bestehen bei der Erzeugung von Projektionsbildern, insbesondere für anamorphotische Abbildungen, wie z. B. an Gebrauchsgegenständen oder an Sichtflächen in architektonischen Räumen.

Es ist bekannt, außergewöhnliche optische Effekte zu erzielen, indem Bilder, insbesondere mit Bild- und/oder Textinhalten, einem Betrachter nicht zur direkten Ansicht, sondern indirekt über eine Reflektorfläche präsentiert werden. Beispielsweise wird in DE 296 19 410 U1 eine Kombination aus einer Untertasse und einer Tasse beschrieben, bei der Bildinhalte auf der Untertasse vorgesehen sind und die Außenseite der Tasse eine Reflektorfläche bildet. Bei Gebrauch können die Bildinhalte in Reflektion an der Außenseite der Tasse betrachtet werden.

Typischerweise tritt bei der Betrachtung des Projektionsbildes, z. B. auf der Untertasse, durch die Reflektion an der Reflektorfläche, z. B. der Außenseite der Tasse, eine Verzerrung des Projektionsbildes auf. Um dennoch eine erkennbare und entzerrte visuelle Repräsentation zu erhalten, wird als Projektionsbild ein anamorphotisches Bild erzeugt, welches bewusst verzerrt ist, um die bei der Betrachtung in Reflektion auftretende Verzerrung zu kompensieren. Anamorphotische Bilder können, da sie bei direkter Betrachtung nicht ohne Weiteres die Wahrnehmung von Bild- oder Textinhalten erlauben, zur graphisch-abstrakten Gestaltung von Oberflächen verwendet werden.

Die Erzeugung anamorphotischer Bilder, wie sie aus der Kunstgeschichte oder bei der oben genannten Anwendung an Gebrauchsgegenständen, bekannt ist, erfordert hohe gestalterische Fähigkeiten und Erfahrungen eines Graphikers. Schwierig ist insbesondere die Erzeugung von Projektionsbildern für anamorphotische Abbildungen in Reflektion, bei denen sowohl Bild- als auch Textinhalte repräsentiert werden sollen.

In DE 94 01 072.2 ist eine Vorrichtung zur Erzeugung anamorphotischer Abbildungen beschrieben, bei der das Bild, welches durch einen Betrachter wahrgenommen werden soll (Reflektionsbild), mit einer Lichtquelle und optischen Komponenten über die Reflektorfläche auf die Bildfläche zur Erzeugung des anamorphotischen Bildes projiziert wird. Mit dieser Vorrichtung wird die Reflektion an der Reflektorfläche umgekehrt, so dass das rückprojizierte Reflektionsbild auf der Bildfläche, z. B. der Untertasse, das gewünschte anamorphotische Bild repräsentiert. Mit der in DE 94 01 072.2 U1 beschriebenen Vorrichtung können zwar vorteilhafterweise anamorphotische Bilder mit verringertem Aufwand und unabhängig vom Talent eines Graphikers erzeugt werden. Die herkömmliche Technik hat jedoch auch mehrere Nachteile. Erstens ist die Anwendung der herkömmlichen Vorrichtung auf die Erzeugung anamorphotischer Bilder an Gebrauchsgegenständen, z. B. Tassen, beschränkt. Für die Erzeugung großflächiger Bilder, wie sie bspw. in architektonischen Räumen gewünscht sind, ist die herkömmliche Vorrichtung nicht geeignet. Des Weiteren erfordert die herkömmliche Technik einen relativ hohen Justieraufwand. Da die Lichtquelle an einem bestimmten Ort relativ zu den Reflektor- und Bildflächen angeordnet ist, kann das anamorphotische Bild lediglich für eine einzige optimale Betrachtungsrichtung erzeugt werden.

Die Aufgabe der Erfindung ist es, ein verbessertes Verfahren zur Erzeugung eines Projektionsbildes, insbesondere für anamorphotische Abbildungen, bereitzustellen, mit dem die Nachteile der herkömmlichen Technik vermieden werden.

Diese Aufgabe wird durch ein Verfahren mit den Merkmalen von Anspruch 1 gelöst. Bevorzugte Ausführungsformen und Anwendungen der Erfindung ergeben sich aus den abhängigen Ansprüchen.

Gemäß einem ersten Gesichtspunkt basiert die Erfindung auf der allgemeinen technischen Lehre, ein gattungsgemäßes Verfahren zur Erzeugung eines Projektionsbildes durch eine Umkehrung der Reflektion eines gewünschten Reflektionsbildes an einer Reflektorfläche so weiter zu entwickeln, dass die Umkehrung der Reflektion, d. h. die umgekehrte Projektion von einem Betrachter über die Reflektorfläche auf die Bildfläche durch die Anwendung einer optischen Umkehrfunktion auf das Reflektionsbild realisiert wird. Vorteilhafterweise wird die herkömmliche Vorrichtung zur Erzeugung einer anamorphotischen Abbildung durch die Anwendung eines mathematischen Operators (die optische Umkehrfunktion) auf die Bilddaten des Reflektionsbildes ersetzt. Das Reflektionsbild wird einer Bildbearbeitung unter Verwendung der optischen Umkehrfunktion unterzogen, um das Projektionsbild zu erzeugen. Die Erfinder haben festgestellt, dass für die Erzeugung eines Projektionsbildes optische Umkehrfunktionen mit an sich bekannten numerischen Mitteln, z. B. auf der Grundlage analytischer Funktionen oder numerisch vorliegender Funktionen konstruierbar sind und überraschend gute Ergebnisse liefern.

Mit dem Begriff "optische Umkehrfunktion" wird hier jeder mathematische Operator bezeichnet, der die physikalische Umkehrung der Reflektion des gewünschten Projektionsbildes an der Reflektorfläche repräsentiert. Die Umkehrfunktion stellt eine Abbildung des gewünschten Reflektionsbildes auf das zu konstruierende Projektionsbild bereit.

Mit dem Begriff "Projektionsbild" wird jede sichtbare Präsentation von Bild- und/oder Textinhalten bezeichnet, die auf einer Bildfläche bereitgestellt werden soll. Mit dem Begriff "Reflektionsbild" wird das von einem Betrachter an der Reflektorfläche wahrgenommene Bild bezeichnet, welches das Projektionsbild in Reflektion an der Projektorfläche repräsentiert.

Das erfindungsgemäße Verfahren hat insbesondere die folgenden Vorteile. Erstens wird der komplizierte optische Aufbau der herkömmlichen Vorrichtung zur Erzeugung einer anamorphotischen Abbildung vermieden. Es können Projektionsbilder mit komplexen Bild- und/oder Textinhalten erzeugt werden. Das Projektionsbild kann leicht an verschiedene Betrachterpositionen angepasst werden. Die Erzeugung des Projektionsbildes kann ausschließlich auf der Basis vorbestimmter Eingabeinformationen, insbesondere des gewünschten Reflektionsbildes und der geometrischen Parameter der Bild- und Reflektorflächen, konstruiert werden. Im Gegensatz zur herkömmlichen Technik bestehen keine Beschränkungen in Bezug auf die Größe der Bild- und Reflektorflächen.

Ein weiterer Vorteil der Erfindung, insbesondere bei der Gestaltung architektonischer Flächen, ergibt sich aus der Möglichkeit, das Projektionsbild sogar für einen sich relativ zur Reflektorfläche bewegenden Betrachter seitenrichtig und entzerrt zu erzeugen. So ist gemäß einer bevorzugten Ausführungsform der Erfindung vorgesehen, dass zunächst eine Bildabwicklung von Teilbildern des gewünschten Reflektionsbildes bereitgestellt wird. Anschließend werden das Reflektionsbild als Oberflächenbild der Teilbilder auf der Reflektorfläche berechnet und eine optische Umkehrfunktion auf das Oberflächenbild angewendet. Vorteilhafterweise kann damit das Projektionsbild für die Betrachtung in verschiedenen Raumrichtungen bereitgestellt werden. Besonders bevorzugt ist das Oberflächenbild ein dreidimensionales Bild, das der gekrümmten Oberfläche der Reflektorfläche angepasst ist. Beispielsweise wird das Oberflächenbild der Bildabwicklung auf einer Zylinderoberfläche oder einer anders gekrümmten Oberfläche bereitgestellt.

Vorteilhafterweise kann gemäß einer weiteren Ausführungsform der Erfindung die optische Umkehrfunktion so bereitgestellt werden, dass sie ausschließlich von geometrischen Abbildungsparametern abhängt. Diese umfassen insbesondere die geometrischen Parameter (Koordinaten) der mindestens einen Betrachterposition eines Betrachters relativ zu der Reflektorfläche und/oder die geometrischen Parameter (Koordinaten) der Bildfläche relativ zur Reflektorfläche. Diese Abbildungsparameter einschließlich der vorgegebenen Informationen über die Größen und Formen der Bild- und Reflektorflächen und das gewünschte Reflektionsbild erlauben die vollständige Erzeugung des Projektionsbildes. Da diese Informationen als Daten übertragen werden können, besteht vorteilhafterweise die Möglichkeit, dass das Projektionsbild nicht am Ort der Bild- und Reflektorflächen, sondern von diesem entfernt erzeugt wird. Beispielsweise können die Daten mit den geometrischen Abbildungsparametern einer architektonischen Fläche an einen Rechner übermittelt werden, z. B. über ein Computernetzwerk, um auf diesem das Projektionsbild zu erzeugen.

Gemäß einer besonders bevorzugten Ausführungsform der Erfindung wird zur Erzeugung des Projektionsbildes ein Computer-Netzwerk verwendet. Das Reflektionsbild, ggf. bestehend aus einer Reihe von Teilbildern wird von einem Nutzer-Rechner, z. B. über das Internet auf einen Dienst-Rechner übertragen, auf dem die Erzeugung des Projektionsbildes erfolgt. Hierzu werden geometrische Abbildungsparameter verwendet, die auf dem Dienst-Rechner für die konkrete Anwendung bereits gespeichert sind oder gemeinsam mit dem Reflektionsbild vom Nutzer-Rechner übertragen werden.

Vorzugsweise umfasst die Erzeugung des Projektionsbildes die Erzeugung von Bilddaten, z. B. im bmp-Format oder einem anderen Graphik-Format, welche das Projektionsbild repräsentieren. Vorteilhafterweise können die Bilddaten des Projektionsbildes (Projektionsbild-Daten) für verschiedene Anwendungen der Erfindung zur Verfügung gestellt werden.

Gemäß einer ersten Variante kann eine Anzeigeeinrichtung mit den Bilddaten angesteuert werden. Die Bildfläche, für die das Projektionsbild erzeugt worden ist, kann bspw. einen Anzeige-Bildschirm umfassen. Die Projektionsbild-Daten können verwendet werden, um eine Graphik-Schaltung (Graphik-Karte) des Bildschirms anzusteuern, um das Projektionsbild auf dem Bildschirm anzuzeigen. Der Bildschirm ist in Bezug auf die Reflektorfläche so angeordnet, dass ein Betrachter das Projektionsbild in Reflektion über die Reflektorfläche betrachten kann.

Gemäß einer zweiten Variante kann mit den Bilddaten eine Bildgebungseinrichtung, wie z. B. ein Drucker angesteuert werden. Mit der Bildgebungseinrichtung kann das Projektionsbild auf einem geeigneten Bildträger, z. B. Folie, Papier oder dgl. ausgedruckt und an der Bildfläche angeordnet werden. Die Bildgebungseinrichtung kann alternativ zur Ausgabe des Projektionsbildes auf der Oberfläche eines Gegenstandes, wie z. B. eines Gebrauchsgegenstandes eingerichtet sein.

Gemäß einer dritten Alternative können die Bilddaten des Projektionsbildes in einem Datenspeicher gespeichert werden. Die Bilddaten werden im Datenspeicher bereitgestellt, um bei Bedarf z. B. mit der Anzeigeeinrichtung präsentiert oder mit der Bildgebungseinrichtung ausgegeben zu werden. So können gemäß einer weiteren Variante der Erfindung Kombinationen der Steuerung der Anzeigeeinrichtung und/oder Bildgebungseinrichtung und der Speicherung in einem Datenspeicher vorgesehen sein.

Ein Computer-Programmprodukt, dass sich auf einem Computerlesbaren Speichermedium befindet, und einen Programmcode zur Ausführung des erfindungsgemäßen Verfahrens aufweist, und einer Vorrichtung, die ein Computer-lesbares Speichermedium enthält, das Programmanweisungen zur Ausführung des erfindungsgemäßen Verfahrens enthält, stellen unabhängige Gegenstände der Erfindung dar.

Weitere Einzelheiten und Vorteile der Erfindung werden im Folgenden unter Bezug auf bevorzugte Ausführungsformen beschrieben, die in den beigefügten Zeichnungen illustriert sind. Es zeigen:
- Figur 1:: eine beispielhafte Illustration der Anwendung eines erfindungsgemäß erzeugten Projektionsbildes an einem Gebrauchsgegenstand; und
- Figur 2:: eine schematische Illustration einer Anwendung des erfindungsgemäß erzeugten Projektionsbildes an einer architektonischen Fläche.

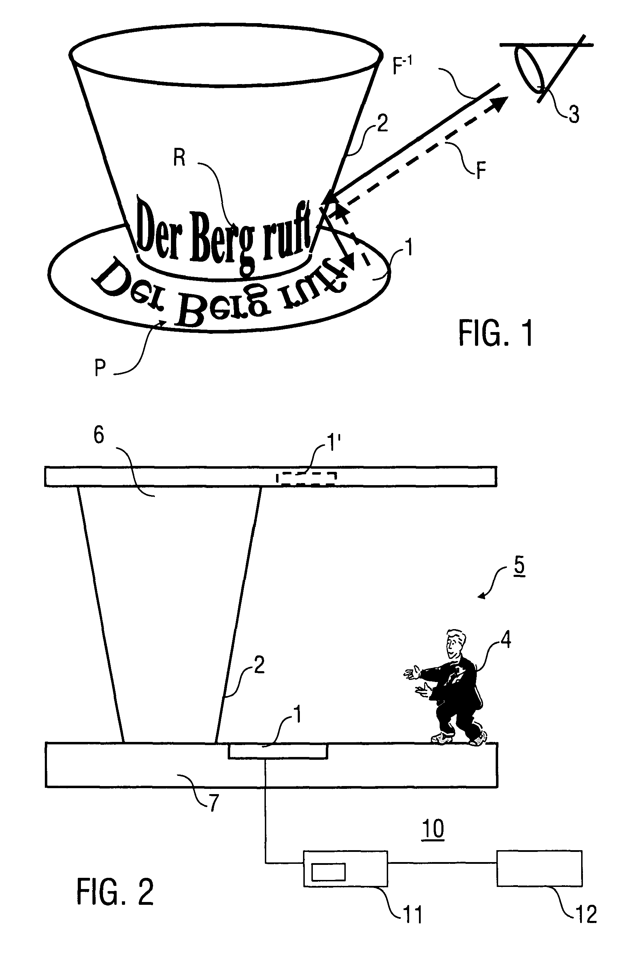

In Figur 1 ist die Erfindung am Beispiel der an sich bekannten anamorphotischen Abbildung an einem Gebrauchsgegenstand (Tasse mit Untertasse) illustriert. Auf der Oberseite der Untertasse ist die Bildfläche 1 vorgesehen, für die das Projektionsbild P erzeugt werden soll, das bei Betrachtung in Reflektion an der Reflektorfläche 2 (spiegelnde Außenseite der Tasse) für den Betrachter 4 an der Betrachterposition 3 ein bestimmtes Reflektionsbild R ergibt. Entsprechend den Gesetzen der geometrischen Optik, insbesondere dem optischen Reflektionsgesetz wird das Reflektionsbild R mit einer bestimmten optischen Reflektionsfunktion F gemäß R = F(P) gebildet. Die Reflektionsfunktion F hängt von den geometrischen Abbildungsparametern der konkreten Anwendung der Erfindung, insbesondere von der Form und Größe der Bildfläche 1, der Form und Größe der Reflektorfläche 2, der gegenseitigen Ausrichtung der Bild- und Reflektorflächen 1, 2 und der Betrachterposition 3 in Bezug auf die Reflektorfläche 2 ab.

Erfindungsgemäß wird das Projektionsbild P berechnet, indem von dem gewünschten Reflektionsbild R ausgegangen wird. Auf das Reflektionsbild R wird die optische Umkehrfunktion F⁻¹ angewendet, für die gilt F (F⁻¹(P)) - 1. Die Berechnung des Projektionsbildes erfolgt mit an sich bekannter Software, wie z. B. dem Software-Paket "MAYA". Im Ergebnis werden die Bilddaten des Reflektionsbildes R in Projektionsbild-Daten umgerechnet, die zur Ansteuerung eines Druckers verwendet werden, mit dem das Projektionsbild P auf der Bildfläche 1 aufgetragen wird.

Die Anwendung der Erfindung an Gebrauchsgegenständen ist nicht auf die in Figur 1 gezeigte Kombination aus Tasse und Untertasse beschränkt. Es können in Abhängigkeit von den konkreten Bedingungen andere Formen oder Gegenstände vorgesehen sein. Zum Beispiel kann die Bildfläche in einem Tisch, in dessen Oberfläche ein LCD-Bildschirm integriert ist, oder einer Unterlage eines Gebrauchsgegenstandes vorgesehen sein.

Figur 2 zeigt eine alternative Anwendung der Erfindung bei der Erzeugung von Projektionsbildern für architektonische Flächen, wie z. B. Wandflächen in geschlossenen Räumen oder in Außenräumen, Stellflächen, Möbelflächen oder dgl.. In Figur 2 ist beispielhaft eine Säule 6 gezeigt, die als Informationsträger im öffentlichen Raum, z. B. auf einer Messe, einem Museum oder im Nahverkehr verwendet werden soll. Die Säule 6 hat die Form eines Kegelstumpfs, der sich zum Boden 7 hin verjüngt. Die Mantelfläche der Säule 6 bildet die Reflektorfläche 2. Hierzu ist auf der Mantelfläche der Säule 6 eine spekular reflektierende Beschichtung, z. B. eine Verspiegelung vorgesehen. Die Bildfläche 1 ist im Boden 7 eingelassen. Die Bildfläche 1 ist Teil eines Bildschirms, z. B. ein LCD-Bildschirm, auf dem das gewünschte Projektionsbild angezeigt werden kann.

Die Anwendung der Erfindung an architektonischen Flächen ist nicht auf die in Figur 2 gezeigten Formen beschränkt. Es können in Abhängigkeit von den konkreten Bedingungen andere Formen vorgesehen sein. Zum Beispiel kann die Säule eine Zylinderform aufweisen oder anderweitig gekrümmt sein. Des Weiteren kann eine ebene Reflektorfläche 2 vorgesehen sein, die senkrecht oder geneigt in Bezug auf den Boden 7 angeordnet ist. Des Weiteren ist nicht zwingend vorgesehen, dass die Bildfläche 1 im Boden angeordnet ist. Vielmehr kann die Präsentation des Projektionsbildes mit einer Bildfläche 1' erfolgen, die oberhalb der Säule 6 in einer Ecke angebracht ist (gestrichelt gezeigt).

Der Betrachter 4 kann sich in Bezug auf die Säule 6 in einem bestimmten Raumbereich 5 aufhalten. Der Raumbereich 5 bildet eine Reihe von Betrachterpositionen, für die das Projektionsbild auf der Bildfläche 1 erfindungsgemäß berechnet werden kann. Der Raumbereich 5 kann z. B. einen Gang umfassen, der an der Säule 6 vorbeiführt. In diesem Fall setzt sich das Reflektionsbild, das der Betrachter 4 an der Reflektorfläche 2 wahrnehmen soll, vorzugsweise aus mehreren Teilbildern zusammen, die dem Betrachter 4 mit der Bildfläche 1 präsentiert werden. Hierzu kann im Boden 7 ein Sensor enthalten sein, mit dem erfasst wird, wo sich der Betrachter 4 befindet, um ihm passend zur aktuellen Position im Raumbereich 5 die korrekte, seitenrichtige und entzerrte Information an der Reflektorfläche 2 zu präsentieren.

Im Einzelnen erfolgt die Erzeugung des Projektionsbildes mit den folgenden Schritten. Zuerst wird die Abwicklung des Reflektionsbilds für die gesamte Reflektorfläche geplant. Es wird die Betrachterposition im Raum festgestellt. Dabei wird insbesondere der Abstand von der Reflektorfläche 2 und der Abstand von der Bildfläche 1 ermittelt. In einem weiteren Schritt wird das Reflektionsbild als Oberflächenbild der Bildabwicklung auf der Reflektorfläche berechnet. Schließlich werden mit der optischen Umkehrfunktion F⁻¹ die Bilddaten des Projektionsbildes berechnet.

Der zur Erzeugung der Bildfläche 1 vorgesehene Bildschirm ist mit einem Steuerrechner (Nutzer-Rechner) 11 verbunden, der insbesondere einen Bilddaten-Speicher und eine Graphik-Schaltung zur Ansteuerung des Bildschirms enthält. Der Steuerrechner 11 kann über ein Computer-Netzwerk 10, z. B. das Internet mit einem Dienst-Rechner 12 verbunden werden, auf dem die Berechnung des Projektionsbildes erfolgt. Die Berechnung des Projektionsbildes erfolgt mit an sich bekannter Software, wie z. B. dem Software-Paket "MAYA". Der Dienst-Rechner 12 kann mit weiteren Steuer-Rechnern im Rahmen der gleichen Anwendung oder bei anderen Anwendungen der Erfindung verbunden werden.

Die in der Beschreibung, den Ansprüchen und den Zeichnungen offenbarten Merkmale der Erfindung können einzeln oder in Kombination für die Umsetzung der Erfindung in der Praxis von Bedeutung sein.

## Patentansprüche

1. Verfahren zur Erzeugung eines Projektionsbildes (P) für eine Bildfläche (1), wobei das Projektionsbild (P) in Reflexion an einer Reflektorfläche (2) ein Reflexionsbild (R) gemäß R = F(P) ergibt, wobei F eine vorbestimmte Abbildungsfunktion ist, mit den Schritten:
- Bereitstellung des Reflexionsbildes (R), und
- Ermittlung des Projektionsbildes (P) durch eine Umkehrung der Reflexion des Reflexionsbildes (R) an der Reflektorfläche (2) auf die Bildfläche (1),
**dadurch gekennzeichnet dass**
- die Umkehrung der Reflexion des Reflexionsbildes (R) die Anwendung einer vorbestimmten Umkehrfunktion F⁻¹ auf das Reflexionsbild (R) umfasst, wobei das Projektionsbild (P) gemäß P = F⁻¹(R) berechnet wird.

2. Verfahren gemäß Anspruch 1, bei dem die Bereitstellung des Reflexionsbildes (R) die Schritte umfasst:
- Bereitstellung einer Bildabwicklung des gewünschten Reflexionsbildes (R), und
- Berechnung des Reflexionsbildes (R) als Oberflächenbild (O) der Bildabwicklung auf der Reflektorfläche (2), und
- Anwendung der Umkehrfunktion F⁻¹ auf das Oberflächenbild (O).

3. Verfahren gemäß Anspruch 2, bei dem das Reflexionsbild (R) als dreidimensionales Oberflächenbild (O) der Reflektorfläche (2) berechnet wird.

4. Verfahren gemäß einem der vorhergehenden Ansprüche, bei dem die Umkehrfunktion F⁻¹ von geometrischen Abbildungsparametern abhängt, welche mindestens eine Betrachterposition (3) eines Betrachters (4) relativ zu der Reflektorfläche (2) und/oder eine Relativposition der Bildfläche (1) in Bezug auf die Reflektorfläche (2) umfassen.

5. Verfahren gemäß Anspruch 4, bei dem die mindestens eine Betrachterposition einen Raumbereich (5) umfasst, der an die Reflektorfläche angrenzt.

6. Verfahren gemäß einem der vorhergehenden Ansprüche, bei dem
- die Bereitstellung des Reflexionsbildes (R) in einem Computer-Netzwerk (10) erfolgt, wobei das Reflexionsbild (R) von einem Nutzer-Rechner (11) auf einen Dienst-Rechner (12) übertragen wird, und
- die Ermittlung des Projektionsbildes (P) auf dem Dienst-Rechner (12) erfolgt.

7. Verfahren gemäß einem der vorhergehenden Ansprüche, mit dem weiteren Schritt:
- Anpassung des Formats des Projektionsbildes (P) an die Größe einer realen Bildfläche.

8. Verfahren gemäß einem der vorhergehenden Ansprüche, bei dem die Erzeugung des Projektionsbildes (P) umfasst:
- Ermittlung von Bilddaten.

9. Verfahren gemäß Anspruch 8, mit mindestens einem der Schritte:
- Steuerung einer Anzeigeeinrichtung (6) mit den Bilddaten,
- Steuerung einer Bildgebungseinrichtung (7) mit den Bilddaten, und
- Speicherung der Bilddaten in einem Datenspeicher (8).

10. Computer-Programmprodukt, das sich auf einem Computerlesbaren Speichermedium befindet, mit einem Programmcode zur Ausführung eines Verfahrens nach einem der Ansprüche 1 bis 9.

11. Vorrichtung, die ein Computer-lesbares Speichermedium enthält, das Programmanweisungen zur Ausführung eines Verfahrens nach einem der Ansprüche 1 bis 9 enthält.
